(19) Europäisches Patentamt
European Patent Office
Office européen des brevets

(11) EP 0 708 117 B1

(12) EUROPEAN PATENT SPECIFICATION

(45) Date of publication and mention of the grant of the patent:
**11.08.1999 Bulletin 1999/32**

(51) Int Cl.6: **C08F 210/16**, C08F 4/645, C08F 210/18

(21) Application number: **95115561.3**

(22) Date of filing: **02.10.1995**

# (54) Process for producing copolymer rubber

Verfahren zur Herstellung eines Copolymerkautschuks

Procédé de production d'un élastomère de copolymère

(84) Designated Contracting States:
**DE FR IT NL**

(30) Priority: **03.10.1994 JP 23883794**

(43) Date of publication of application:
**24.04.1996 Bulletin 1996/17**

(73) Proprietor: **SUMITOMO CHEMICAL COMPANY LIMITED**
**Osaka-shi, Osaka 541-0041 (JP)**

(72) Inventors:
- **Yamamoto, Keisaku**
  **Ichihara-shi, Chiba-ken (JP)**
- **Wakatsuki, Kizuku**
  **Ichihara-shi, Chiba-ken (JP)**
- **Hozumi, Hidetake**
  **Ichihara-shi, Chiba-ken (JP)**
- **Furusawa, Atsuko**
  **Urayasu-shi, Chiba-ken (JP)**

(74) Representative: **VOSSIUS & PARTNER**
**Siebertstrasse 4**
**81675 München (DE)**

(56) References cited:
**EP-A- 0 389 144**
**EP-A- 0 495 099**
**EP-A- 0 574 258**
**EP-A- 0 612 768**
**WO-A-93/08221**
**WO-A-93/14132**
**WO-A-94/07927**
**WO-A-94/07928**
**WO-A-95/00526**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 708 117 B1

## Description

The present invention relates to a process for producing an ethylene-α-olefin copolymer rubber or an ethylene-α-olefin-nonconjugated diene terpolymer rubber, wherein the α-olefin is propylene or 1-butene.
The ethylene-α-olefin copolymer and the ethylene-α-olefin-nonconjugated diene terpolymer, respectively known as EPM and EPDM, are rubber materials widely used as modifier for various resins, electric-wire coating material, waterproof sheet material, belts, various hoses, and material for automobile parts. Also, when necessary, sulfur, or peroxides is (are) used to vulcanize these copolymers so as to improve their rubber characteristics for use.
In general, vanadium catalysts have conventionally been used for making the above-mentioned rubbers.
Also, some catalysts used for olefin polymerization have already been known. For example, JP-A-58-19309 discloses a process for producing olefins in which a metallocene compound of a transition metal and an aluminoxane are used as catalysts. While these catalysts are highly active and excellent in their copolymerizing capability, there is a problem that a large quantity of an aluminoxane, which is expensive, is necessary.
Further, JP-A-5-262823 and JP-A-5-43618 disclose a process for polymerizing olefins in which a transition metal complex, a boron complex, and a small amount of an aluminum compound are used as catalysts. However, this process has a problem that the resulting olefin has such a high α-olefin content and a low density, and that the aimed object of making a copolymer or terpolymer rubber having a high molecular weight cannot sufficiently be attained.
Also, while EP-A-612768 discloses a process for copolymerizing ethylene and an α-olefin in which a transition metal complex, a boron complex, and a small amount of an aluminum compound are used as catalysts; this process has a problem that a high-temperature reaction condition is necessary for obtaining a high-molecular polymer.
WO 93/14 132 discloses a

process for polymerizing an olefin, diolefin or acetylenic compound comprising contacting the olefin, diolefin or acetylenic compound or mixture thereof with a
catalyst composition comprising in combination:

a cationic complex of the formula:

$$CpMYX_n{}^{+}A\text{-},$$

wherein:

M is a metal of Group 4 of the Periodic Table of the Elements having an oxidation state of 3 or 4, bound in an $\eta^5$ bonding mode to Cp;
n is zero or one, depending on the oxidation state of M;
Cp is a cyclopentadienyl-, indenyl-, tetrahydroindenyl-, fluorenyl-, or octahydrofluorenyl- group covalently substituted with at least a divalent moiety, R", said divalent moiety, R", having from 1 to 50 atoms and being covalently bonded to Y, Cp further may be substituted with from 1 to 4 alkyl, halogen, aryl, haloalkyl, alkoxy, aryloxy or silyl groups containing up to 20 non-hydrogen atoms;
Y is a divalent substituent selected from groups of the formula -NR-, -PR-, -O- or-S-, wherein R is $C_{1-20}$ hydrocarbyl, and Y together with R", Cp and M forms a metallocycle;
X, if any, is a monovalent substituent selected from the group consisting of hydride, halo, alkyl, aryl, silyl, germyl, aryloxy, alkoxy, amide, siloxy, and phosphine groups, and combinations thereof, said groups or combination having up to 20 non-hydrogen atoms; and
A- is an inert, noncoordinating anion, and

an alumoxane;

the molar ratio of alumoxane to cationic complex being from 0.1:1 to 50:1.

WO 94/07928 refers to a process for polymerizing an olefin, diolefin, or mixture thereof comprising contacting an olefin, diolefin, or mixture thereof with a catalyst complex comprising:

(a) an organometallic complex of the formula I:

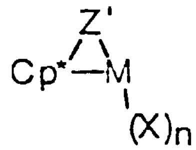

wherein:

M is a metal of Group 4 of the Periodic Table of the Elements,
Cp* is a cyclopentadienyl group bound in an $\eta^5$ bonding mode to M or such a cyclopentadienyl group substituted with from one to four substituents selected from the group consisting of hydrocarbyl, silyl, germyl, halo, hydrocarbyloxy, amine, and mixtures thereof, said substituent having up to 20 non-hydrogen atoms. or optionally, two substituents together cause Cp* to have a fused ring structure;
Z' is a divalent moiety other than a cyclopentadienyl group or substituted cyclopentadienyl groups, said moiety having up to 20 non-hydrogen atoms, and optionally Cp* and Z' together form a fused ring system;
X independently each occurrence is an anionic ligand group having up to 50 non-hydrogen atoms and X is not a cyclopentadienyl or substituted cyclopentadienyl group; and
n is 1 or 2 depending on the valence of M;

(b) a compound or complex capable of converting the organometallic complex (a) into a cationic complex of the formula II:

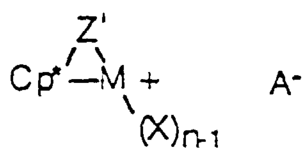

wherein:

Cp*, Z', M, X, and n are as defined above, and
$A^-$ is a monovalent, noncoordinating, compatible anion, and

(c) a catalyst support in contact with (a) and (b), said catalyst support comprising silica reacted with a methylaluminoxane, a modified methylaluminoxane, or a mixture thereof.

An object of the present invention is to provide a process for producing EPM and EPDM rubbers, which have desirable characteristics as mentioned above, more efficiently and more economically. Namely, the object of the present invention is, by developing a catalyst system having a higher catalytic activity, to reduce the time required for manufacture and thereby to provide a process of manufacture in which improved efficiency and advantageous cost can be realized in the manufacture. Further, an object of the present invention is, by using a catalyst system having a high catalytic activity, to provide a process of manufacture in which the amount of catalyst used during the manufacture can greatly be reduced and accordingly the processes such as to remove residual catalysts in the manufactured product can be eliminated, so that the cost of the final product can be reduced and the quality thereof improved.

This object could be achieved by a process according to claim 1 or claim 2, wherein a high-molecular EPM or EPDM copolymer rubber having desirable characteristics can be obtained under mild conditions when ethylene and propylene or 1-butene or ethylene, propylene or 1-butene, and a nonconjugated diene are copolymerized in the presence of a catalyst system containing constitutional components (A)-(C) listed below.

More in detail, in a process of producing an EPM copolymer rubber, the present invention provides a process of producing a copolymer rubber having an ethylene content of 30-90% by weight, a density (d) of 0.840-0.900 g/cm$^3$, a glass transition temperature (Tg), measured by a DSC 200 differential scanning calorimeter, of not higher than -20°C, and a limiting viscosity [$\eta$] determined in xylene of 70°C within the range of 1.0 dl/g < [$\eta$] < 8 dl/g, from ethylene and propylene or 1-butene,

said process comprising the step of using a catalyst system containing constitutional components (A)-(C):

said component (A) being (tertiary butylamido)-dimethyl-(tetramethyl-$\eta^5$-cyclopentadienyl) silane titanium dichloride,

said component (B) being triphenyl carbenium tetrakis(pentafluorophenyl)borate or N,N-dimethylanilinium tetrakis (pentafluorophenyl) borate, and

said component (C) being methylaluminoxane or triisobutyl aluminum.

Further the invention provides

a process of producing a terpolymer rubber having an ethylene content of 30-90% by weight a density (d) of 0.840-0.900 g/cm$^3$, an iodine value measured by an infrared absorption spectrometry of 0.5-40, a glass transition temperature (Tg), measured by a DSC 200 differential scanning calorimeter, of not higher than -20°C, and a limiting viscosity [$\eta$] determined in xylene of 70°C within the range of 1.0 dl/g < [$\eta$] < 8 dl/g, from ethylene, propylene or 1-butene, and a nonconjugated diene,

said process comprising the step of using a catalyst system containing constitutional components (A)-(C):

said component (A) being (tertiary butylamido)dimethyl-(tetramethyl-$\eta^5$-cyclopentadienyl)silane titanium dichloride,

said component (B) being triphenylcarbenium tetrakis(pentafluorophenyl) borate or N,N-dimethylanilinium tetrakis (pentafluorphenyl) borate, and

said component (C) being methylaluminoxane or triisobutyl aluminum.

Further, the present invention provides a process characterized in that the ratio (molar ratio) of used amounts of component (A)/component (B) is 1/(0.01-100) and the ratio (molar ratio) of used amounts of component (A)/component (C) is 1/(1-1000).

Also, the present invention provides a process characterized in that polymerization is effected at a temperature not lower than -20°C but lower than 120°C.

Also, in particular, the present invention provides a process of producing a terpolymer rubber having an ethylene content of 30-90% by weight, a density (d) of 0.840-0.900 g/cm$^3$, and an iodine value of 0.5-40 from ethylene, propylene, and 5-ethylidene-2-norbornene, characterized in that a catalyst system containing (tertiary butylamido) dimethyl-(tetramethyl-$\eta^5$-cyclopentadienyl)silanetitanium dichloride as the component (A), triphenylcarbenium tetrakis (pentafluorophenyl) borate as the component (B), and methylaluminoxane or triisobutylaluminum as the component (C) is used and polymerization is effected at a temperature of 20-80°C and a pressure of 1-300 atmospheric pressure.

<u>Material (Ethylene, $\alpha$-olefine, and Nonconjugated Diene)</u>

The $\alpha$-olefins usable in the present invention are, apart from ethylene, propylene or 1-butene. These $\alpha$-olefins may be used separately as well as in combination as a mixture. These $\alpha$-olefins may be selected appropriately such that the resulting copolymer rubber has optimum characteristics. For example, they may be selected such that a desirable physical characteristic will be obtained when the copolymer or a mixture containing the copolymer is vulcanized.

Also, in general, when $\alpha$-olefins noted above are used, it is unnecessary for conditions in the polymerizing process in accordance with the present invention to change substantially. When the quantitative ratios of catalyst constitutional components, reaction temperature, and reaction pressure, disclosed in the present invention are optimized, a copolymer rubber having desirable characteristics can be obtained. Slight adjustment of these reaction conditions can easily be effected by one skilled in the art. For example, when the quantitative ratios of catalyst constitutional components are changed within the scope disclosed in the present invention, polymerization conditions for obtaining a copolymer having desirable characteristics can be found.

Further, the nonccnjugated dienes usable in the producing of EPDM in the present invention are not specifically restricted. Various type of dienes such as cyclic or linear diene compounds may preferably be used. Specific examples of the cyclic nonconjugated dienes include, for instance, dicyclopentadiene, 2-methyl-2,5-norbornadiene, 5-ethylidene-2-norbornene, 5-isopropylidene-2-norbornene, 5-isopropenyl-2-norbornene or 5-methylene-2-norbornene. Specific examples of the linear nonconjugated dienes include 1,4-hexadiene, 1,6-octadiene or 6-methyl-1,5-heptadiene.

In the production of an ethylene-$\alpha$-olefin-nonconjugated diene terpolymer having desirable characteristics in accordance with the present invention, the nonconjugated dienes may be selected appropriately such that the resulting terpolymer rubber has optimum characteristics. For example, they may be selected such that a desirable physical characteristic will be obtained when the terpolymer or a mixture containing the terpolymer is vulcanized.

Also, in general, when various dienes noted above are used, it is unnecessary for conditions in the polymerization process in accordance with the present invention to change substantially. When the quantitative ratios of catalyst constitutional components, reaction temperature, and reaction pressure, disclosed in the present invention are optimized, an EPDM terpolymer rubber having desirable characteristics can be obtained. Slight adjustment of these reaction conditions can easily be effected by one skilled in the art. For example, when the quantitative ratios of catalyst constitutional components are changed within the scope disclosed in the present invention, polymerization conditions for obtaining a terpolymer having desirable characteristics can be found.

Catalyst System

In the constitution of the catalyst system usable in the process of producing a copolymer(and terpolymer) having desirable characteristics in accordance with the present invention, the following catalyst component (A) and co-catalyst constitutional components (B) and (C) are essential. The substances which can preferably be used in the present invention as the catalyst component (A) are a group of transitional metal complexes as defined above.

Slight adjustment of the conditions can be made according to a method (e.g., design of experiment) known to one skilled in the art with reference to desirable characteristics of the copolymer(terpolymer) or conditions for the polymerization reaction (e.g., solvent, temperature, pressure, concentration, etc, in solution polymerization).

The co-catalyst component (B) constituting the catalyst system in the present invention may be a borate compound as defined above which reacts with the transition metal in the above-mentioned component (A) to form an ionic complex. Namely, the component (B) is a compound which can make the above-mentioned metal complex cationic. Also, it is a borate compound which rather weakly coordinates or coacts with the resulting cationic compound, without reacting therewith, and provides a counter anion. Specific examples which are used in the present invention are defined above, cf. component (B) in claim 1.

The co-catalyst component (B) represented by the foregoing specific examples can be selected without substantially changing the conditions for realizing the present invention disclosed herein. Slight adjustment thereof can be effected when an optimum selection is made according to a method (e.g., design of experiment) known to one skilled in the art with reference to desirable characteristics of the copolymer(terpolymer) or conditions for the polymerization reaction [e.g., solvent, temperature, pressure, concentration, etc, in solution polymerization as well as the selection of the catalyst constitutional components (A)].

The co-catalyst component (C) constituting the catalyst system in the present invention is a methylaluminoxane or an organic aluminum compound containing an alkyl group which has at least one branch. Preferably, as the methylaluminoxane such as linear $R_2AlO(Al(R)\text{-}O)_nAlR_2$ or cvclic $(Al(R)\text{-}O)_{n+2}$, where R is methyl, that having a degree of polymerization(n) of about 0-50, preferably 5-40 is used.

The organic aluminum compound which can preferably be used in the present invention is typically represented by formula (4):

$$AlR^{b}R^{b'}R^{b''} \qquad (4)$$

wherein $R^b$, $R^{b'}$, and $R^{b''}$ may be the same or different from each other, representing hydrogen atoms, halogen atoms, amido groups, alkoxyl groups, or hydrocarbon groups, while at least one of them has to be a branched hydrocarbon group. Specific examples of the compound represented by formula (4) include, for instance, triisopropylaluminum, diisopropylaluminum chloride, isopropylaluminum dichloride, triisobutylaluminum, diisobutylaluminum chloride, isobutylaluminum dichloride, tri-t-butylaluminum, di-t-butylaluminum chloride or t-butylaluminum dichloride. In particular, triisobutylaluminum is preferably used in the present invention.

While the catalyst system composed of the three kinds of the constitutional components explained in the foregoing may be selected without substantially changing the conditions from those disclosed herein, it is easy for one skilled in the art to optimize and select the combination of kinds of the above-mentioned catalyst system in order to obtain desirable characteristics in the copolymer(terpolymer) product. For example, with reference to the desirable characteristics in the copolymer(terpolymer) rubber product, it is easy for one skilled in the art to find out, on the basis of a known designing method for experiment, optimum manufacturing conditions by selecting the kinds, concentrations, and quantitative ratios of optimum catalyst component (A) and optimum co-catalyst components (B) and (C) suitable for the kinds of monomers used and their polymerization reaction conditions.

The catalyst system used in the present invention is mainly composed of the constitutional components (A), (B), and (C). While the quantitative ratios of these constitutional components depend on their kinds or desirable characteristics of the product and are not restricted, in general, the ratio (molar ratio) of component (A):component (B) is preferably at 1:0.01 to 1:100, more preferably within the range of 1:0.5 to 1:10, or particularly preferably within the range of 1:1 to 1:5. With respect to l mol of the component (A), usually 1-1000 mol, preferably 1-500 mol, or more preferably 1-300 mol of the component (C) is used. Since methylaluminoxanes are particularly expensive, it is preferable in terms of cost that the used amount thereof be as low as possible.

The above-mentioned ratios of constitutional components are generic. One skilled in the art can select and

decide optimum conditions for producing a copolymer(terpolymer) rubber having desirable characteristics on the basis of a design of experiment.

Polymerization Reaction

Polymerization methods for producing a copolymer(terpolymer) rubber having desirable characteristics in accordance with the present invention are not restricted in particular. General polymerization conditions for ethylene, or propylene with a Ziegler-Natta catalyst system or Kaminsky catalyst system may preferably be used. For example, any of bulk polymerization methods using a monomer as a solvent, solution polymerization methods in an appropriate solvent, suspension polymerization methods in an appropriate inactive solvent, and vapor phase polymerization methods under various pressures may be used as long as a copolymer(terpolymer) having desirable characteristics in accordance with the present invention can be prepared thereby. Also, the copolymer(terpolymer) may be prepared in a batch process as well as in a continuous process. While the constitution disclosed herein is not substantially changed in the process of producing a copolymer having desirable characteristics in accordance with the present invention, specific control conditions necessary for each polymerization technique may be optimized by selection of the catalyst system in accordance with the present invention or, if necessary, by addition of an appropriate supporting agent to the catalyst system in accordance with the present invention. Also, adjustment of concentrations of polymerizable monomers, stirring conditions, adjustment of reaction temperature or techniques for separating the copolymer product may be optimized by a known process (cf. Koji Saeki and Shinzo Omi, "New Polymer Manufacturing Process", K.K. Kogyo Chosakai).

While Examples of the present invention disclose polymerization effected by a solution polymerization method, it is needless to state that the process of producing a copolymer(terpolymer) rubber having desirable characteristics in accordance with the present invention is not restricted thereto. In crder to optimize the controlling conditions for the above-mentioned various polymerization reactions, the knowledge in the solution polymerization technique may be utilized. Accordingly, an optimum embodiment of the present invention will be explained with reference to the solution polymerization technique in the following.

Solution Polymerization Technique

In the present invention, the order of mixing of catalyst constitutional components for preparation of the catalyst system is not restricted in particular and may be selected according to the polymerization methods, or conditions used, the kinds of monomers used or the conditions for addition. For example, the components (A) and (B) may be mixed with each other beforehand and then used as they are. Also, the product formed by the components (A) and (B) mixed with each other may be separated, washed, and then used. Further, the product of the components (A) and (B) may be mixed in a polymerization system.

The component (C) may be mixed with the component (A), the component (B), or the product of the components (A) and (B) for use.

These constitutional components may be contacted with each other and adjusted outside of the polymerization reaction system beforehand as well as in the polymerization reaction system. The catalyst constitutional components may be added to monomers and polymerization solvents beforehand as well as directly to the polymerization system. When necessary, the catalyst constitutional components may be used as being carried by an inorganic (e.g., zeolite) or organic support (e.g., polymer beads). Though not restricted in particular, inactive hydrocarbon solvents used for preparing the catalyst beforehand may specifically include aliphatic hydrocarbons such as propane, butane, pentane, hexane, heptane, octane, decane, dodecane, and kerosene; alicyclic hydrocarbons such as cyclopentane, cyclohexane, and methylcyclopentane; aromatic hydrocarbons such as benzene, toluene, and xylene; halogenic hydrocarbons such as ethylene chloride, chlorobenzene, and dichloromethane; and a mixture thereof. The pressure and atmosphere during the preparation and the preparation time may be set arbitrarily. It is usually preferable that the preparation temperature be within the range of -100 to 250°C. A longer preparation time may be necessary when the temperature is too low, while the catalytic activity may be decreased due to the decomposing reaction in the catalyst system when the preparation temperature exceeds the above-mentioned range. Preferably, the catalyst is prepared at a temperature in the order of the temperature for the polymerization reaction condition. For example, a temperature in the order of 0-100°C is preferable.

Solvents for solution polymerization in the present invention are not restricted in particular. For example, aromatic hydrocarbons such as benzene, toluene, xylene, and ethylbenzene; alicyclic hydrocarbons such as cyclopentane, cyclohexane, and methylcyclohexane; aliphatic hydrocarbons such as pentane, hexane, heptane, and octane; and halogenic hydrocarbons such as chloroform and dichloromethane may be used. These solvents may be used separately as well as in a combination of two or more. Also, a monomer such as an $\alpha$-olefin may be used as a solvent or a part thereof.

In order to make a copolymer(terpolymer) rubber having desirable characteristics in the present invention, like the selection of the catalyst system, the selection of the polymerization temperature is important. In order to optimally make a copolymer(terpolymer) having desirable characteristics in accordance with the present invention, the polymerization temperature may be optimized by various methods known to one skilled in the art, e.g., a design of experiment. In general, in the present invention, a temperature of not lower than -20°C but lower than 120°C is preferable. The temperature is more preferably at 0-100°C, particularly preferably at 0-60°C, or most preferably at 20-60°C. When the polymerization temperature is too low, the reaction activity may become so low that the reaction practically stops proceeding. When the temperature is too high, on the other hand, the catalyst system may be inactivated by decomposition so that an undesirable side reaction may proceed in parallel or the polymerization reaction itself may stop. Accordingly, a preferable reaction temperature is defined so as to maintain a high catalytic activity in accordance with the present invention and to obtain a practical speed in the polymerization reaction.

In order to monitor the proceeding of the reaction in the present invention, various type of analytical methods for organic compounds may be used. When partial sampling is used, monitoring can easily be effected by various spectroscopy techniques (IR, NMR, etc).

The separation of the polymerization reaction product in accordance with the present invention from the reaction solution is not restricted in particular and may be effected by a method by which the solvent is eliminated by distillation, a method by which steam is added so as to remove the solvent or a method by which a poor solvent such as methanol is added so as to form a precipitate. The product may be separated and collected from the polymerization solution and then dried to yield a solid copolymer(terpolymer) rubber.

In general, the copolymer(terpoiymer) rubber which may be obtained by the method (e.g., the solution polymerization technique explained in the foregoing) in accordance with the present invention has the following characteristics. Namely, it has an ethylene content within the range of 30-90% by weight, preferably of 32-88% by weight, or more preferably of 35-85% by weight. Also, it has a glass transition temperature (Tg) of not higher than -20°C, preferably not higher than -30°C, or more preferably not higher than -40°C. The density (d), which is one of the desirable characteristics of the copolymer(terpolymer) rubber in accordance with the present invention, is determined by the above-mentioned monitoring methods as being within the range of 0.840-0.900 g/cm$^3$, preferably within the range of 0.845-0.900 g/cm$^3$, or particularly preferably within the range of 0.850-0.898 g/cm$^3$ Also, when the terpolymer rubber is an ethylene-$\alpha$-olefin-nonconjugated diene-terpolymer rubber, its iodine value, which is one of the desirable characteristics in the terpolymer rubber in accordance with the present invention, is within the range of 0.5-40, preferably within the range of 1-30, or particularly preferably within the range of 2-25.

The copolymer(terpolymer) manufactured by the process in accordance with the present invention may have a high molecular weight. For example, it may have a limiting viscosity [$\eta$] determined in 70°C xylene, which is one of the desirable characteristics, within the range of 1.0 dl/g < [$\eta$] < 8 dl/g. Also, a copolymer(terpolymer) having a limiting viscosity of 1.0 dl/g < [$\eta$] < 6 dl/g may be obtained. In particular, a copolymer(terpolymer) having a limiting viscosity of 1.0 dl/g < [$\eta$] < 5 dl/g may be obtained.

When the molecular weight of the copolymer(terpolymer) rubber which can be manufactured by the present invention is expressed by the molecular weight (calculated on the basis of polystyrene) determined by gel permeation chromatography (GPC), its weight average molecular weight (Mw) is 100,000-10,000,000; particularly 150,000-1,000,000; or more particularly 200,000-1,000,000. Also, the copolymer which can be manufactured by the present invention has a number average molecular weight (Mn) of 50,000-5,000,000; particularly 80,000-500,000; or more particularly 100,000-500,000. Further, its molecular weight distribution (Mw/Mn) is 1.3-4.5 or, in particular, 1.3-3.8, in more particularly, 1.3-3.0. Therefore, in the process in accordance with the present invention, a copolymer(terpolymer) having a weight average molecular weight Mw of not less than 40,000 or, in particular, not less than 100,000 may be obtained. Further, a copolymer(terpolymer) having a weight average molecular weight Mw of 200,000 or more may be obtained.

The copolymer(terpolymer) rubber obtained by the process in accordance with the present invention having the characteristic parameters explained in the foregoing have substantially the same rubber material characteristics as those of EPM and EPDM which are used in general. For example, (1) its Mooney viscosity ($ML_{1+4}$ at 121°C) is not less than 5, which corresponds to the limiting viscosity [$\eta$] disclosed herein of about 1. Also, (2) MFR (190°C) yields a positive number of not more than 18.

While the control of the molecular weight is particularly important among the preferable characteristics explained in the foregoing, it can be effected by the selection of the catalyst system, the optimization of the ratios of its constitutional components, and the optimization of the polymerization temperature in the process in accordance with the present invention, thereby producing it possible to manufacture a copolymer having a wide range of the molecular weight explained in the foregoing. In particular, when selecting the catalyst system, the influence of the selected component (C) which is an essential constituent of the present invention, i.e., a methylaluminoxane or an organic aluminum compound containing an alkyl group having at least one branched alkyl group, is significant. In particular, the organic aluminum compound having isobutyl group is significant.

In the catalyst system in accordance with the present invention, rather than a nonbranched compound such as triethylaluminum, an organic aluminum having a branched alkyl group (e.g., TIBA) is preferably selected, in particular, for the purpose of producing the above-mentioned desirable copolymer(terpolymer) rubber. This is supposed to be a result of the fact that the branched organic aluminum can coordinate such that a very high catalytic activity is maintained at the catalytic active center at a relatively mild reaction temperature of the present invention and thereby the polymerization product is promoted to a higher molecular weight.

As clearly indicated by Example 1 and Comparative Example 1, the use of TIBA yields a catalytic activity several times as high as that obtained when TEA is used. The limiting viscosity of thus obtained EPM copolymer rubber and its average molecular weight based on GPC are at least ten times as high as those obtained when TEA is used. Also, as clearly indicated by Example 5 and Comparative Example 3, the use of TIBA yields a catalytic activity several ten times as high as that obtained when TEA is used. The limiting viscosity of thus obtained EPDM terpolymer rubber and its average molecular weight based on GPC are at least ten times as high as those obtained when TEA is used. These remarkable differences are also noticeable, as clearly indicated by Example 7 and Comparative Example 4, when the metal of the component (A) is changed.

That is, it is recognized that, in order to obtain an EPM or EPDM rubber having desirable characteristics in the present invention, TIBA is used as a co-catalyst which is much more effective than TEA. Also, the catalytic activity obtained when TIBA is used appears to be substantially the same as that obtained when MAO is used (Examples 1 and 2, Examples 5 and 6, Examples 7 and 8). It should be noted that Examples 4, 7 and 8 are Reference Examples, which do not illustrate the claimed invention.

While the following Examples and their Comparative Examples disclose an embodiment of producing a copolymer(terpolymer) rubber having desirable characteristics under the conditions for solution polymerization using a solvent, which is one aspect of embodying the process in accordance with the present invention, the present invention should not be restricted thereto as long as the gist thereof is not surpassed.

The characteristics of the copolymer(terpolymer) rubbers in accordance with the present invention were measured by the methods explained in the following.

The limiting viscosity [η] was measured by an Ubbelohde's viscometer in xylene at 70°C. Specifically, the following procedure was used. From each sample, 300 mg was dissolved into 100 ml of xylene to prepare a solution of about 3 mg/ml. This solution was diluted into about 1/2, 1/3, and 1/5. These diluted solutions were measured by the Ubbelohde's viscometer in a thermostatic water bath at 70°C(±0.1°C). For each concentration, the measurement was repeated at least three times and an average was calculated from thus measured values.

The molecular weight distribution was measured by a gel permeation chromatography (GPC) technique (150-C ALC/GPC apparatus manufactured by Waters Co.) with o-dichlorobenzene as an elution solvent, a measurement temperature of 140°C, a Shodex Packed Column A-80M manufactured by Showa Denko Co., and polystyrene (having a molecular weight in the range of 68-8,400,000 manufactured by TOSOH Co.) as a molecular weight standard material. Thus, the weight average molecular weight (Mw) calculated on the basis of polystyrene and the number average molecular weight (Mn) were obtained and then the ratio of these values (Mw/Mn) was determined as the molecular weight distribution. As a sample for the measurement, about 5 mg of the copolymer was dissolved in 5 ml of o-dichlorobenzene to attain a concentration of about 1 mg/1 ml. From thus obtained sample solution, 400 μm was injected. At an elution solvent flow rate of 1.0 ml/min, a refractive-index detector was used for the measurement.

The density (d) was measured by an underwater substitution technique. Specifically, the following procedure was used. An automatic hydrometer manufactured by Toyo Seiki Co. was used to measure the density at 23°C by an underwater substitution technique. As the sample, three sheets of 25 x 25 x 2 mm press-mold articles were used and an average was calculated from thus obtained at least three measured values. The density was calculated by A/(A-R) x (density of water at 23°C), wherein A and R indicate the weights of the sample in the air and water, respectively.

The glass transition temperature (Tg) was measured by a DSC200 differential scanning calorimeter manufactured by Seiko Denshi Co. From each sample, about 10 mg was placed like a pellet in a sample cell made of aluminum and the temperature was raised from -150°C to 150°C with a rate of 10°C/min. The Tg was the thus measured value.

The propylene content of the obtained copolymer(terpolymer) rubber was measured by infrared absorption spectrometry (IR spectrum) in which polypropylene, polyethylene, and ethylene-propylene copolymer (50:50) were used as standards. The sample used for the measurement was hot-pressed into a film of about 0.1 mm. The measurement was based on the literature [e.g., Takayama and Usami, "Characterization of Polyethylene by Infrared Absorption Spectrum" or McRae, M.A., Madams, W.F., et al., Die Makromolekulare Chemie, 177, 461 (1976)] and conducted three times while an absorption peak of 1155 $cm^{-1}$ (assigned to a branched methyl) was used as a marker. Also, when necessary, $C^{13}$- and $H^1$-nuclear magnetic resonance spectra were measured at 100°C in o-dichlorobenzene.

In a similar manner, the iodine value of EPDM was measured by infrared absorption spectrometry (IR spectrum) in which poly-5-ethylidene-2-norbornene (poly ENB) was used as a standard. The measurement was repeated

three times while an absorption peak at 1688 $cm^{-1}$ (ENB double bond) was used as a marker.

In order to calculate the catalytic activity, the amount (g) of the copolymer(terpolymer) rubber yielded after the polymerization time of 30 minutes on the basis of the reaction conditions disclosed in Example 1 was divided by the millimole value of the catalyst [component (A)] used and then converted into a value per an hour, i.e., P-g/cat-mmol-h wherein P-g is the weight (g) of the obtained copolymer.

Example 1

A 2-liter separable flask having a stirrer, a thermometer, a dropping funnel, and a reflux condenser was vacuumed and then nitrogen gas was introduced therein so that the inside of the flask was substituted by nitrogen gas. As a polymerization solvent, 1 L of dried n-hexane was introduced into the flask. Then, a mixed gas of ethylene and propylene (with a flow rate of ethylene:propylene=8:2 NL/min) was continuously fed at atmospheric pressure while the temperature of the solvent was maintained at 30°C by a thermostatic water bath. Thereafter, triisobutylaluminum (referred to as "TIBA" in the following, 1.175 mmol) was added to the polymerization solvent.

To the above-mentioned polymerization solvent, (tertiary butylamido)dimethyl(tetramethyl-$\eta^5$-cyclopentadienyl)silanetitanium dichloride (0.0047 mmol, prepared by the method disclosed in Japanese Laid-open Patent Application No.163088/1991(Hei3-163088) was added. Then, a solution in which triphenylcarbenium tetrakis(pentafluorophenyl) borate (0.0236 mmol) had been dissolved in 10 ml of toluene was added thereto. The resulting mixture was stirred for 30 minutes to effect a polymerization reaction. Thereafter, when the solvent was removed from the reaction mixture by a rotary evaporator, 16 g of an ethylene-propylene copolymer rubber was obtained. The characteristics of thus obtained copolymer rubber are shown in Table 1.

Example 2

The same conditions as those of Example 1 were used except that 1.175 mmol of a toluene solution of a methylaluminoxane having a degree of oligomerization of not less than 7 (referred to as "MAO" in the following, manufactured by Tosoh Akzo Corp., 2 ml/l toluene solution) was used in lieu of TIBA to yield 11 g of an ethylene-propylene copolymer rubber. The characteristics of thus obtained copolymer rubber are shown in Table 1.

Example 3

The same conditions as those of Example 1 were used except that N,N-dimethylanilinium tetrakis(pentafluorophenyl) borate (0.0236 mmol) was used in lieu of triphenylcarbenium tetrakis(pentafluorophenyl) borate to yield 69 g of an ethylene-propylene copolymer rubber. The characteristics of thus obtained copolymer rubber are shown in Table 1.

Comparative Example 1

The same conditions as those of Example 1 were used except that, while (tertiary butylamido)dimethyl(tetramethyl-$\eta^5$-cyclopentadienyl)silanetitanium dichloride (0.0052 mmol) and triphenylcarbenium tetrakis(pentafluorophenyl) borate (0.026 mmol) were used as in the case of Example 1, 1.300 mmol of triethylaluminum (referred to as "TEA" in the following, 1 mol/l) was used in lieu of TIBA (and that the polymerization time was 1 hour) to yield 7.6 g of an ethylene-propylene copolymer rubber. The characteristics of thus obtained copolymer rubber are shown in Table 1.

Example 4 (for reference)

The same conditions as those of Example 1 were used except that, in lieu of (tertiary butylamido)dimethyl (tetramethol-$\eta^5$-cyclopentadienyl)silanetitanium dichloride, ethylenebis(indenyl)hafnium dichloride (0.0047 mmol), N, N-dimethylanilinium tetrakis (pentafluorophenyl) borate (0.0236 mmol), and 1.175 mmol of TIBA (1 mol/l hexane solution) were used to yield 4.3 g of an ethylene-propylene copolymer rubber. The characteristics of thus obtained copolymer rubber are shown in Table 1.

Comparative Example 2

The same conditions as those of Example I were used except that, in lieu of (tertiary butylamido)dimethyl (tetramethyl-$\eta^5$-cyclopentadienyl)silanetitanium dichloride, 0.0047 mmol of ethylenebis(indenyl)hafnium dichloride, 0.0236 mmol of triphenylcarbenium tetrakis(pentafluorophenyl) borate, and 1.175 mmol of TEA were used and that the polymerization was effected for 1 hour. As a result, 5.3 g of an ethylene-propylene copolymer rubber was obtained. The characteristics of thus obtained copolymer rubber are shown in Table 1.

Example 5

The same conditions as those of Example 1 were used except that 8 mmol of 5-ethylidene-2-norbornene (referred to as "ENB" in the following) was further added before the addition of the catalyst. As a result, 53 g of an ethylene-propylene-diene terpolymer rubber was obtained. The characteristics of thus obtained copolymer rubber are shown in Table 1.

Example 6

The same conditions as those of Example 1 were used except that ENB (8 mmol) was further added before the addition of the catalyst and that MAO (1.175 mmol) was used in lieu of TIBA. As a result, 20 g of an ethylene-propylene-diene terpolymer rubber was obtained. The characteristics of thus obtained copolymer rubber are shown in Table 1.

Comparative Example 3

The same conditions as those of Example 1 were used except that ENB (8 mmol) was further added before the addition of the catalyst and that TEA (1.175 mmol) was used in lieu of TIBA. As a result, 1.8 g of an ethylene-propylene-diene terpolymer rubber was obtained. The characteristics of thus obtained copolymer rubber are shown in Table 1.

Example 7 (for reference)

The same conditions as those of Example 1 were used except that, in lieu of (tertiary butylamido)dimethyl (tetramethyl-$\eta^5$-cyclopentadienyl)silanetitanium dichloride, ethylenebis(indenyl)hafnium dichloride (0.0047 mmol), triphenylcarbenium tetrakis(pentafluorophenyl) borate (0.0236 mmol), and TIBA (1.175 mmol) were used and that ENB (8 mmol) was further added before the addition of the catalyst. As a result, 1.1 g of an ethylene-propylene-diene terpolymer rubber was obtained. The characteristics of thus obtained copolymer rubber are shown in Table 1.

Example 8 (for reference)

The same conditions as those of Example 1 were used except that, in lieu of (tertiary butylamido)dimethyl (tetramethyl-$\eta^5$-cyclopentadienyl)silanetitanium dichloride, ethylenebis(indenyl)hafnium dichloride (0.0047 mmol), triphenylcarbenium tetrakis(pentafluorophenyl) borate (0.0236 mmol), and MAO (1.175 mmol) were used and that ENB (4 mmol) was further added before the addition of the catalyst. As a result, 2.1 g of an ethylene-propylene-diene terpolymer rubber was obtained. The characteristics of thus obtained copolymer rubber are shown in Table 1.

Comparative Example 4

The same conditions as those of Example 1 were used except that, in lieu of (tertiary butylamido)dimethyl (tetramethyl-$\eta^5$-cyclopentadienyl)silanetitanium dichloride, ethylenebis(indenyl)hafnium dichloride (0.0047 mmol), triphenylcarbenium tetrakis(pentafluorophenyl) borate (0.022 mmol), and TEA (1.100 mmol) were used and that ENB (4 mmol) was further added before the addition of the catalyst. As a result, 0.2 g of an ethylene-propylene-diene terpolymer rubber was obtained. The characteristics of thus obtained copolymer rubber are shown in Table 1.

Table 1

| | Yield (g) | Cat-Activity×$10^3$ (P-g/cat- mmol.hr) | P (wt%) | Iodine Value | [η] dl/g | density g/$cm^3$ | Tg °C | Mn | Mw | Mw/Mn |
|---|---|---|---|---|---|---|---|---|---|---|
| Example1 | 16 | 6.8 | 60 | | 1.82 | 0.857 | -58 | 134890 | 358750 | 2.6 |
| Example2 | 11 | 4.7 | 65 | | 2.11 | 0.860 | -53 | 164820 | 389910 | 2.3 |
| Example3 | 69 | 29.4 | 62 | | 2.18 | 0.853 | -56 | 166050 | 487490 | 2.9 |
| Example4* | 4.3 | 1.8 | 22 | | 1.43 | 0.889 | -52 | 89790 | 266090 | 2.9 |
| Example5 | 53 | 22.5 | 65 | 5.5 | 2.65 | 0.858 | -52 | 195160 | 622790 | 3.1 |
| Example6 | 20 | 8.5 | 62 | 9.2 | 3.46 | 0.867 | -55 | 188190 | 682650 | 3.6 |
| Example7* | 1.1 | 0.5 | 31 | 11.6 | 1.82 | 0.840 | -56 | 151700 | 403030 | 2.7 |
| Example8* | 2.1 | 0.9 | 32 | 8.4 | 1.99 | 0.897 | -57 | 162770 | 367360 | 2.3 |
| Comparative | | | | | | | | | | |
| Example1 | 7.6 | 1.5 | 62 | | 0.38 | | -56 | 11890 | 24190 | 2.0 |
| Example2 | 5.3 | 1.1 | 32 | | 0.69 | | -58 | 38540 | 71340 | 1.8 |
| Example3 | 0.8 | 0.8 | 63 | 8.5 | 0.35 | | -56 | 16400 | 31980 | 1.9 |
| Example4 | 0.2 | 0.07 | 21 | 9.3 | 0.64 | | -50 | 43050 | 79950 | 1.8 |

* Reference examples, which do not illustrate the claimed invention

From the invention thus described, it will be obvious that the invention may be varied in many ways. Such variations are not to be regarded as a departure from the scope of the invention, and all such modifications as would be obvious to one skilled in the art are intended to be included within the scope of the following ciaims.

## Claims

1. A process of producing a copolymer rubber having an ethylene content of 30-90% by weight, a density (d) of 0.840-0.900 g/$cm^3$, a glass transition temperature (Tg), measured by a DSC 200 differential scanning calorimeter, of not higher than -20°C, and a limiting viscosity [η] determined in xylene of 70°C within the range of 1.0 dl/g < [η]

< 8 dl/g, from ethylene and propylene or 1-butene,

said process comprising the step of using a catalyst system containing constitutional components (A)-(C):
said component (A) being (tertiary butylamido)dimethyl-(tetramethyl-$\eta^5$-cyclopentadienyl)silane titanium dichloride,
said component (B) being triphenyl carbenium tetrakis(pentafluorophenyl)borate or N,N-dimethylanilinium tetrakis(pentafluorophenyl)borate,
said component (C) being methylaluminoxane or triisobutyl aluninum.

**2.** A process of producing a terpolymer rubber having an ethylene content of 30-90% by weight a density (d) of 0.840-0.900 g/cm$^3$, an iodine value, measured by infrared absorption spectrometry, of 0.5-40, a glass transition temperature (Tg), measured by a DSC 200 differential scanning calorimeter, of not higher than -20°C, and a limiting viscosity [η] determined in xylene of 70°C within the range of 1.0 dl/g < [η] < 8 dl/g, from ethylene, propylene or 1-butene, and a nonconjugated diene,

said process comprising the step of using a catalyst system containing constitutional components (A)-(C):
said component (A) being (tertiary butylamido)dimethyl-(tetramethyl-$\eta^5$-cyclopentadienyl) silane titanium dichloride,
said component (B) being triphenylcarbenium tetrakis(pentafluorophenyl) borate or N,N-dimethylanilinium tetrakis(pentafluorphenyl) borate,
said component (C) being methylaluminoxane or triisobutyl aluminum.

**3.** A process according to any one of claims 1 or 2, wherein said catalyst system has a ratio (molar ratio) of used amounts of said component (A)/component (B) of 1/(0.01-100) and a ratio (molar ratio) of used amounts of said component (A)/component (C) of 1/(1-1000).

**4.** A process according to any one of claims 1 to 3, wherein polymerization is effected at a temperature not lower than -20°C but lower than 120°C.

**5.** A process according to any one of claims 2 to 4, wherein the terpolymer rubber is made from ethylene, propylene, and 5-ethylidene-2-norbornene, said process comprising the steps of using a catalyst system containing (tertiary butylamido)dinechyl-(tetramethyl-$\eta^5$-cyclopentadienyl)silanetitanium dichloride as said component (A), triphenylcarbenium tetrakis(pentafluorophenyl) borate as said component (B), and triisobutylaluminum as said component (C) and effecting polymerization at a temperature of 20-80°C and a pressure of 1-300 atmospheric pressure.

**Patentansprüche**

**1.** Verfahren zur Herstellung eines Copolymer-Kautschuks mit einem Ethylengehalt von 30-90 Gewichts-%, einer Dichte (d) von 0,840-0,900 g/cm$^3$, einer durch ein Differentialscanningkalorimeter DSC 200 gemessenen Glasübergangstemperatur (Tg) von nicht höher als -20°C und einer in Xylol bei 70°C bestimmten Grenzviskosität [η] innerhalb des Bereichs von 1,0 dl/g < [η] < 8 dl/g, aus Ethylen und Propylen oder 1-Buten, wobei das Verfahren den Schritt des Verwendens eines die Zusammensetzungsbestandteile (A) - (C) enthaltenden Katalysatorsystems umfaßt, wobei

Bestandteil (A) (tert-Butylamido)dimethyl(tetramethyl-$\eta^5$-cyclopentadienyl)silantitandichlorid ist,
Bestandteil (B) Triphenylcarbeniumtetrakis(pentafluorphenyl)borat oder N,N-Dimethylaniliniumtetrakis(pentafluorphenyl)borat ist, und
Bestandteil (C) Methylaluminoxan oder Triisobutylaluminium ist.

**2.** Verfahren zur Herstellung eines Terpolymer-Kautschuks mit einem Ethylengehalt von 30-90 Gewichts-%, einer Dichte (d) von 0,840-0,900 g/cm$^3$, einer durch Infrarotabsorptionsspektrometrie gemessenen Iodzahl von 0,5-40, einer durch ein Differentialscanningkalorimeter DSC 200 gemessenen Glasübergangstemperatur (Tg) von nicht höher als -20°C und einer in Xylol bei 70°C bestimmten Grenzviskosität [η] innerhalb des Bereichs von 1,0 dl/g < [η] < 8 dl/g, aus Ethylen, Propylen oder 1-Buten und einem nicht konjugierten Dien, wobei das Verfahren den Schritt des Verwendens eines die Zusammensetmngsbestandteile (A) - (C) enthaltenden Katalysatorsystems umfaßt, wobei

Bestandteil (A) (tert-Butylamido)dimethyl(tetramethyl-$\eta^5$-cyclopentadienyl)silantitandichlorid ist,
Bestandteil (B) Triphenylcarbeniumtetrakis(pentafluorphenyl)borat oder N,N-Dimethylaniliniumtetrakis(pentafluorphenyl)borat ist, und
Bestandteil (C) Methylaluminoxan oder Triisobutylaluminium ist.

**3.** Verfahren gemäß einem der Ansprüche 1 oder 2, wobei das Katalysatorsystem ein Verhältnis (Molverhältnis) der verwendeten Mengen von Bestandteil (A)/Bestandteil (B) von 1/(0,01-100) und ein Verhältnis (Molverhältnis) der verwendeten Mengen von Bestandteil (A)/Bestandteil (C) von 1/(1-1000) aufweist.

**4.** Verfahren gemäß einem der Ansprüche 1 bis 3, wobei die Polymerisation bei einer Temperatur von nicht tiefer als -20°C, jedoch tiefer als 120°C durchgeführt wird.

**5.** Verfahren gemäß einem der Ansprüche 2 bis 4, wobei der Terpolymer-Kautschuk aus Ethylen, Propylen und 5-Ethyliden-2-norbomen hergestellt wird, und das Verfahren die Schritte des Verwendens eines Katalysatorsystems, enthaltend (tert-Butylamido)dimethyl(tetramethyl-$\eta^5$-cyclopentadienyl)silantitandichlorid als Bestandteil (A), Triphenylcarbeniumtetrakis(pentafluorphenyl)borat als Bestandteil (B) und Triisobutylaluminium als Bestandteil (C) umfaßt, und die Polymerisation bei einer Temperatur von 20-80°C und einem Druck von 1-300 Atmosphärendruck durchgeführt wird.

## Revendications

**1.** Procédé pour la production d'un caoutchouc de copolymère présentant une teneur en éthylène de 30-90% en poids, une densité (d) de 0,840-0,900 g/cm$^3$, une température de transition vitreuse (Tg) mesurée par un calorimètre différentiel DSC 200 d'au plus -20°C et une viscosité limitante [$\eta$] déterminée dans du xylène à 70°C dans l'intervalle de 1,0 dl/g < [$\eta$] < 8 dl/g, à partir d'éthylène et de propylène ou de butène-1,

ledit procédé comprenant l'étape consistant à utiliser un système de catalyseur contenant les constituants constitutionnels (A-C) :
ledit constituant (A) étant le dichlorure de (tert.-butylamido)diméthyl-(tétraméthyl-$\eta^5$-cyclopentadiényl)silanetitane,
ledit constituant (B) étant le tétrakis(pentafluorophényl)borate de triphénylcarbénium ou le tétrakis(pentafluorophényl)borate de N,N-diméthylanilinium,
ledit constituant (C) étant le méthylaluminoxane ou le triisobutylaluminium.

**2.** Procédé pour la production d'un caoutchouc de terpolymère présentant une teneur en éthylène de 30-90% en poids, une densité (d) de 0,840-0,900 g/cm$^3$, un indice d'iode mesuré par spectrométrie d'absorption infrarouge de 0,5-40, une température de transition vitreuse (Tg) mesurée par un calorimètre différentiel DSC 200 d'au plus -20°C et une viscosité limitante [$\eta$] déterminée dans du xylène à 70°C dans l'intervalle de 1,0 dl/g < [$\eta$] < 8 dl/g, à partir d'éthylène et de propylène ou de butène-1 et d'un diène non conjugué,

ledit procédé comprenant l'étape consistant à utiliser un système de catalyseur contenant les constituants constitutionnels (A-C) :
ledit constituant (A) étant le dichlorure de (tert.-butylamido)diméthyl-(tétraméthyl-$\eta^5$-cyclopentadiényl)silanetitane,
ledit constituant (B) étant le tétrakis(pentatluorophényl)borate de triphénylcarbénium ou le tétrakis(pentafluorophényl)borate de N,N-diméthylanilinium,
ledit constituant (C) étant le méthylaluminoxane ou le triisobutylaluminium.

**3.** Procédé selon l'une quelconque des revendications 1 ou 2, dans lequel le système de catalyseur présente un rapport (rapport molaire) des quantités utilisées desdits constituant (A)/constituant (B) de 1/(0,01-100) et un rapport (rapport molaire) des quantités utilisées desdits constituant (A)/constituant (C) de 1/(1-1000).

**4.** Procédé selon l'une quelconque des revendications l à 3, dans lequel la polymérisation est réalisée à une température d'au moins -20°C mais inférieure à 120°C.

**5.** Procédé selon l'une quelconque des revendications 2 à 4, dans lequel le caoutchouc de terpolymère est fabriqué à partir d'éthylène, de propylène et de 5-éthylidène-2-norbornène, ledit procédé comprenant les étapes consistant

à utiliser un système de catalyseur contenant du dichlorure de (tert.-butylamido)diméthyl(tétraméthyl-$\eta^5$-cyclopentadiényl)silanetitane comme ledit constituant (A), du tétrakis(pentafluorophényl)borate de triphénylcarbénium comme ledit constituant (B) et du triisobutylaluminium comme ledit constituant (C) et à réaliser la polymérisation à une température de 20-80°C et à une pression de 1-300 pression atmosphérique.